# EUROPEAN PATENT SPECIFICATION

(11) **EP 1 153 994 B1**
(45) Date of publication and mention of the grant of the patent: **11.04.2007**
(21) Application number: 99961494.4
(22) Date of filing: 14.12.1999
(51) Int. Cl.: C09D 11/10, B41M 1/34

(54) **UV-CURABLE PAINT COMPOSITION AND PROCESS FOR ITS APPLICATION TO GLASS SUBSTRATES**
UV-POLYMERISIERBARE ANSTRICHZUSAMMENSETZUNG UND VERFAHREN ZU IHRER ANWENDUNG AUF GLASSSUBSTRATEN
COMPOSITION DE PEINTURE POLYMERISABLE AUX UV ET PROCEDE PERMETTANT D'APPLIQUER CETTE COMPOSITION SUR DES SUBSTRATS DE VERRE

(30) Priority: 22.12.1998 US 218878
(43) Date of publication of application: 14.11.2001
(73) Proprietor: Centro de Tecnologia Vidriera Monterrey, S.A. de C.V., 66265 Garza Garcia, Nuevo Leon (MX)
(72) Inventor: CAVAZOS GUTIERREZ, Rodrigo, Cd. Guadalupe, Nuevo Leún 67170 (MX)
(74) Representative: Bublak, Wolfgang
(86) International application number: PCT/MX1999/000038
(87) International publication number: WO 2000/037576

(56) References cited:
- EP-A- 0 604 815
- WO-A-98/52700
- DATABASE HCAPLUS EN STN. [Online] 20 February 1996 SAKURA COLOR PROD. CORP, XP002946787 Database accession no. 1996:321209 & JP 8 048 923 A

## Description

### BACKGROUND OF THE INVENTION.

### A. FIELD OF THE INVENTION.

The present invention relates to an organic ink composition for a glass substrates and a process for its application and, more specifically to an organic ink composition of the type which is curable by ultra-violet radiation, for printing labels, designs or any other decoration on glass bottles,

### B. DESCRIPTION OF THE RELATED ART.

There are some known inorganic and organic pigment compositions in the market, which provide an acceptable coloration mainly for the decoration of plastic and paper articles. However, those pigment compositions have not been properly applied in glass substrates mainly because its weak resistance to water, solvents, abrasion, etc.

There is a number of well known radiation curable ink compositions for screen printing, including metallic pigments such as copper, silver, cadmium, chromium manganese, etc. Examples of such ink compositions are disclosed in U. S. patents No. 3,957,694 ; 3,968,056 and 3,989,644 all of Bolon et al, mainly suitable for screen printing on printed circuits.

It has been an increased interest of glass makers, specifically of glass bottle makers, to use organic inks for labeling or decorating glass bottles, mainly for environmental preservation purposes and reduce the energy needs, as well as for complying with ambient regulations.

It is also known a number of organic compositions, pigmented or not which are applied and cured by ultra-violet to infra-red radiation, for the most diverse purposes such as providing privacy, solar radiation control, abrasion strengthening, etc., examples of these organic compositions are disclosed in the U. S. patents No. 4,923,754 and 4,946,874 both of Lee et all; 5,514,521 of Kobayashi; 5,178,952 of Yamamoto et al, and 5,262,450 of Vera et al.

These pigments or coatings are commonly limited to plastic and paper substrates, printed circuits, etc., but they could not been used for glass applications because of a lack of adhesion or anchoring to the very smcoth surface of the glass substrates, as well as because of their poor resistance to the water, solvents and abrasion for rough handling

U. S. patent No. 5,731,359 of Kamen et al, disclose a pigmented ink composition including a radiation curable component and a pyrrolopyrrol or isoindoline pigment, to provide a red or yellow color, which apparently can be applied by hot stamping from a foil or directly to a substrate and cured by radiation.

Those inks apparently has been suitable for application on disposable (no-returnable) glass bottles.

Therefore, some adhesion promoters, photoinitiator such as the Irgacure 184 from Ciba Geigy, strengthening agents, storage stabilizers, photosenzitizers, crosslinking agents and so forth, have been introduced into the ink compositions and coatings in order to improve their resistance to the filling process, the multiple alkaline washing process and rough handling, but sill they have not been considered suitable for imparting the desired properties for application to returnable glass bottles.

In accordance with the present invention, it is provided an ultraviolet radiation curable organic ink composition, comprising 80% to 95% by weight of an epoxy-polyurethane-based ink; 0.5% to 8% by weight of an additive including a mixture of polyethylenic waxes and polythetrafluoroethylenic waxes; 1% to 7% by weight of an additive which improves the water resistance, made from low and intermediate molecular weight polyamide which is recomended to be added just before applying the prepared ink composition because this composition, once prepared, lasts 8 hours at most; and an adhesion promoter which can be added to the ink formula or used as a primer to be applied to the glass substrate before the decoration, and which includes a silane in a concentration of 0.15% to 3% by weight; which, among others:
is specifically suitable for glass substrates;
has a desired strengthening to the washing, before and after the filling process, as well as a suitable resistance to the abrasion and heavy duty to which non-returnable glass bottles are subjeted;
can be calcined at the furnace when it is recycled as cullet into a molten glass mass, without affecting the properties of the glass mass because it does not contain toxic metals such as lead, cadmium, hexavalent chromium, etc.;
is environmentally suitable because it does not generate noxious combustion gases nor hot-house gases;
reduces the ink consumption because it has a specific gravity which is about four times less heavier than the vitrifiable ceramic paints which have commonly been used for the decoration of glass bottles;
provides a greater yield per weight unit and saves energy and space because it does not need big furnaces for heating the paint;
provides more intense and bright colors and a more wide range of colors than the ceramic paints;
has a better adherence to the glass substrate because of the presence of the adhesion promoter in the ink or in the primer applied to the surface of the glass bottles and because of the specific application method by which it is applicable.

Furthermore, in accordance with the present invention, it is provided a process for the preparation and application of the above disclosed ultraviolet radiation curable organic ink composition, comprising: a) preparing an ultraviolet radiation curable ink composition by mixing 80% to 95% by weight of an epoxy-polyurethane-base ink composition; and 0.5% to 8% by weight of an additive prepared from a mixture of polyethylenic waxes and polythetrafluoroethylenic waxes, strongly stirring the mixture; b) adding from 1 to 7% by weight of an additive that improves the water resistance, made from low and intermediate molecular weight polyamide, just before applying the prepared ink composition because this composition, once prepared, lasts a maximum of 8 hours; c) adding an adhesion promoter primer composition comprising 0.15% to 3% by weight of a silane; e) applying the prepared ink composition on the glass substrate, by serigraphy, tampography or the like and curing the ink composition by exposing the coated surface to an ultraviolet radiation; f) heating the substrate by passing it through a heating lehr to increase the temperature of the substrate between 100° to 160°C; and g) applying a lubricant agent including an oleic acid-based product as a gas or vapor, and/orspraying an aqueous emulsion of an ethoxilated polyethylen-derivative.

So that the above composition in combination with the disclosed process for its preparation and application, provides all the above disclosed advantages over the known prior art.

### SUMMARY OF THE INVENTION

It is therefore a main object of the present invention, to provide an ultraviolet radiation curable organic ink composition specially suitable for glass substrates, which has a desired strengthening to the washing with water, before and after the filling process, as well as a suitable resistance to the severe abrasion and heavy duty to which non-returnable glass bottles are subjected;

It is also a main object of the present invention, to provide an ultraviolet radiation curable organic ink composition, of the above disclosed nature, which may be calcined at a furnace when it is recycled as cullet into a molten glass mass, without affecting the properties of the glass mass because it does not contain toxic metals such as lead, cadmium, hexavalent chromium, etc. and which makes it is environmentally suitable because it does not generate noxious combustion gases nor hot-house gases;

It is also a main object of the present invention, to provide an ultraviolet radiation curable organic ink composition, of the above disclosed nature, which reduces the ink consumption because it has a specific gravity which is about four times less heavier than the vitrifiable ceramic paints which have commonly been used for the decoration of glass bottles, providing a greater yield per weight unit and saves energy and space because it does not need big furnaces for heating the paint;

It is still a main object of the present invention, to provide an ultraviolet radiation curable organic ink composition, of the above disclosed nature, which provides more intense and bright colors and a more wide range of colors than the ceramic paints.

It is additionally a main objective of the present invention, to provide a process for the preparation and application of an ultraviolet radiation curable organic ink composition specially suitable for glass substrates, by which all of the above desired disclosed properties are imparted to the glass substrates, products or bottles.

These and other additional objects and advantages of the present invention will be evident to those persons having ordinary skill in the art, from the following detailed description of the invention with reference to specific embodiments thereof.

### DETAILED DESCRIPTION OF THE INVENTION.

In accordance with the present invention, it is provided an ultraviolet radiation curable ink composition comprising:
an ultra-violet radiation curable ink composition including 80 to 95% by weight of an epoxy-polyurethane-based ink; and 0.5% to 8% by weight of an additive including a mixture of polyethylenic waxes and polythetrafluoroethylenic waxes;
1 to 7% by weight of an additive that improves the water resistance, made from low and intermediate molecular weight polyamide, to be added just before applying the prepared ink composition because this composition, once prepared, lasts less than 8 hours; and
an adhesion promoter primer including 0.15% to 3% by weight of a silane.

As to the process for the preparation and application of the above disclosed ultraviolet radiation curable organic ink composition, in a preferred embodiment thereof, this comprises:
a) preparing an ultra-violet radiation curable ink composition including mixing 80% to 95% by weight of an epoxy-polyurethane-base ink; and 0.5% to 8% by weight of an additive prepared from a mixture of polyethylenic waxes and polythetrafluoroethylenic waxes, strongly stirring the mixture;
b) adding from 1 to 7% by weight of a water resistant agent made from low and intermediate molecular weight polyamide, just before applying the prepared ink composition because this composition, once prepared, lasts a maximum of 8 hours;
c) adding an adhesion promoter primer composition comprising 0.15% to 3% by weight of a silane;
d) applying the prepared ink composition on the glass substrate, by serigraphy, tampography or the like;
e) curing the ink composition by exposing the coated surface to an ultraviolet radiation;
f) heating the substrate by passing it through a heating lehr to increase the temperature of the substrate between 100° to 160°C; and
g) applying a lubricant agent including an oleic acid-based product as a gas or vapor, and spraying an aqueous emulsion of an ethoxilated polyethylen-derivative, on the portion of the glass substrate including the ink composition.

In another embodiment of the invention, it is convenient to prepare separatelly the adhesion promoter primer composition by adding 70% to 97% by weight of deminerallized water and %0 to 19.4% by weight of ethyl alcohol and 0.15 to 3% of silane under stirring, and apply it as a thin layer on the glass substarte, before applying the ultraviolet curable organic ink composition, in order to improve the adhesion thereof, and drying said adhesion promoter primer composition on the glass substrate.

Said epoxy-polyurethane-base ink, can be selected from different colors, when red color is desired, this is selected from the family of monoazo pigments such as those known as cd-photoflex from the company Sericol, Inc., specifically that sold under the trademark Graftol 210; Red 2000 CD-JC-2455; Red Rubine CD-155; Intensive Red CD-141; Heat Red CD-180, all fro the company Sericol, Inc.

The white color is selected from the family of the titainium dioxide, specifically those sold under the specifications Opaque White CD-311 also by Sericol Inc.

Other colors are Yellow Medium CD-123; Yellow Lemon CD-111; Silver Gray CD-302; Black Shadow CD-SB; Opaque Black CD-301; Reflex Blue CD-205; Blue Process CD-190; and others.

The additive including the mixture of polyethylenic waxes and polythetrafluoroethylenic waxes known as "PTFE" are selected from those sold as Polifluo XF-523 from the company Micropowders, Corp, the Series TL from Harwick Standard Chemical, Polipenco from Polymer Corporation and Whitcon ftom Whitford Chemical Corp., and others.

The water resistant agent made from low and intermediate molecular weight polyamide is selected from that sold as Kaeropox, and "Water Resistance Agent" from Sericol, Inc.,

The adhesion promoter primer is selected from those sold as Z-6011, Z-6032, both from Dow Corning, A-1100 from Witco, or similar, or a mixture thereof.

And finally, the lubricant agent including an oleic acid-based product is selected from that sold as AP-5 from US-CAN.

Thus, it is to be understood that, because of the properties of the ultraviolet curable organic ink composition, it is convenient to prepare and apply the composition a few hours before it is applied.

Furthermore, it is to be understood that the invention is not limited to the above disclosed specific embodiments of the composition and of the process for preparing and applying it to the glass substrates, and that the persons having ordinary skill in the art will be able to introduce changes into the components and steps in view of the teachings of this invention, which will be within the true scope of the invention as claimed in the following.

## Claims

1. An ultraviolet curable organic ink composition for glass substrates, comprising:
- an ultraviolet radiation curable ink composition including 80 to 95% by weight of an epoxy-polyurethane-based ink; and 0,5 % to 8% by weight of a mixture of polyethylenic waxes and polythetrafluoroethylenic waxes;
- 1 to 7% by weight of a water resistant agent made from low and intermediate molecular weight polyamide, to be added just before applying the prepared ink composition because this composition, once prepared, lasts less than 8 hours; and
- 0,15% to 3% by weight of a silane, as an adhesion promoter.

2. The ultraviolet curable organic ink composition in accordance with claim 1, wherein when the composition is to be applied to the glass substrate before the ink composition, and includes 0,15% to 3% by weight of a silane, as an adhesion promoter; 70% to 97% by weight of demineralized water and 0% to 19,4% by weight of ethyl alcohol.

3. A process for applying an ultraviolet curable organic ink composition to a substrate, comprising:
a) preparing an ultraviolet radiation curable organic ink composition by mixing 80% to 95% by weight of an epoxy-polyurethane-based ink; and 0,5% to 8% by weight of a mixture of polyethylenic waxes and polythetrafluoroethylenic waxes, strongly stirring the mixture;
b) adding from 1 to 7% by weight of a water resistant agent made from low and intermediate molecular weight polyamide, just before applying the prepared ink composition because this composition, once prepared, lasts less than 8 hours;
c) adding from 0,15% to 3% by weight of a silane, as an adhesive promoter;
d) applying the prepared ink composition on the glass substrate, by serigraphy, tampography or the like;
e) curing the ink composition by exposing the coated surface to an ultraviolet radiation;
f) heating the substrate by passing it through a heating lehr to increase the substrate temperature between 100°C to 160°C; and
g) applying a lubricant agent including an oleic acid-based product as a gas or vapor, and/or spraying an aqueous emulsion of an ethoxilated polyethylen-derivative, on the portion of the glass substrate including the ink composition.

4. The process of claim 3, wherein the adhesion promoter primer composition is prepared separately by adding 70% to 97% by weight of demineralized water and 0% to 19,4% by weight of ethyl alcohol and 0,15% to 3% by weight of a silane under stirring, and is applied as a thin layer on the glass substrate, before applying the ultraviolet curable organic ink composition, and dried on the glass substrate.

## Patentansprüche

1. Durch Ultraviolettlicht aushärtbare organische Tintenzusammensetzung für Glassubstrate, umfassend
- eine durch Ultraviolettstrahlung aushärtbare Tintenzusammensetzung, einschließend 80 bis 95 Gew.-% einer Tinte auf Epoxy-Polyurethan-Basis; und 0,5 bis 8 Gew.-% eines Gemischs aus Polyethylenwachsen und Polytetrafluorethylenwachsen;
- 1 bis 7 Gew.-% eines aus Polyamid mit niedrigem bis mittlerem Molekulargewicht hergestellten wasserabstoßenden Mittels, das direkt vor dem Aufbringen der hergestellten Tintenzusammensetzung zuzusetzen ist, da diese Zusammensetzung nach ihrer Herstellung weniger als 8 Stunden beständig ist; und
- 0,15 bis 3 Gew.-% eines Silans als Haftverstärker.

2. Durch Ultraviolettlicht aushärtbare organische Tintenzusammensetzung nach Anspruch 1, wobei, wenn die Zusammensetzung auf das Glassubstrat vor der Tintenzusammensetzung aufzubringen ist, und 0,15 bis 3 Gew.-% eines Silans als Haftverstärker; 70 bis 97 Gew.-% entmineralisiertes Wasser und 0 bis 19,4 Gew.-% Ethylalkohol einschließt.

3. Verfahren zum Aufbringen einer durch Ultraviolettlicht aushärtbaren organischen Tintenzusammensetzung auf ein Substrat, umfassend
a) Herstellen einer durch Ultraviolettstrahlung aushärtbaren organischen Tintenzusammensetzung durch Mischen von 80 bis 95 Gew.-% einer Tinte auf Epoxy-Polyurethan-Basis; und 0,5 bis 8 Gew.-% eines Gemischs aus Polyethylenwachsen und Polytetrafluorethylenwachsen unter kräftigem Rühren des Gemischs;
b) Zusetzen von 1 bis 7 Gew.-% eines aus Polyamid mit niedrigem bis mittlerem Molekulargewicht hergestellten wasserabstoßenden Mittels direkt vor dem Aufbringen der hergestellten Tintenzusammensetzung, da diese Zusammensetzung nach deren Herstellen weniger als 8 Stunden beständig ist;
c) Zusetzen von 0,15 bis 3 Gew.-% eines Silans als Haftverstärker;
d) Aufbringen der hergestellten Tintenzusammensetzung auf das Glassubstrat durch Siebdruck, Tampondruck oder dergleichen;
e) Aushärten der Tintenzusammensetzung durch Bestrahlen der beschichteten Oberfläche mit Ultraviolettlicht
f) Erwärmen des Substrats durch Durchleiten dessen durch einen Heiz-Kühlofen zum Erhöhen der Substrattemperatur auf zwischen 100 bis 160°C; und
g) Aufbringen eines ein Produkt auf Ölsäure-Basis einschließenden Schmiermittels als Gas oder Dampf, und/oder Aufsprühen einer wässrigen Emulsion aus einem ethoxylierten Polyethylenderivat auf den Teil des Glassubstrats, der die Tintenzusammensetzung einschließt.

4. Verfahren nach Anspruch 3, wobei die Grundierungszusammensetzung aus Haftverstärker durch Zusetzen von 70 bis 97 Gew.-% entmineralisiertes Wasser und 0 bis 19,4 Gew.-% Ethylalkohol und 0,15 bis 3 Gew.-% eines Silans unter Rühren separat hergestellt wird und vor dem Aufbringen der durch Ultraviolettlicht aushärtbaren Tintenzusammensetzung auf das Glassubstrat als dünne Schicht aufgebracht und auf dem Glassubstrat getrocknet wird.

## Revendications

1. Composition d'encre organique polymérisable aux ultraviolets pour des substrats de verre, comprenant :
- une composition d'encre polymérisable aux rayonnements ultraviolets, comprenant 80 à 95 % en poids d'une encre à base d'époxy-polyuréthane et 0,5 % à 8 % en poids d'un mélange de cires polyéthyléniques et de cires polytétrafluoroéthyléniques ;
- 1 à 7 % en poids d'un agent résistant à l'eau constitué de polyamide de bas poids moléculaire et de poids moléculaire intermédiaire à ajouter juste avant l'application de la composition d'encre préparée car cette composition, une fois préparée, dure moins de 8 heures ; et
- 0,15 % à 3 % en poids d'un silane comme activateur d'adhésion.

2. Composition d'encre organique polymérisable aux ultraviolets selon la revendication 1, dans laquelle la composition doit être appliquée au substrat de verre avant la composition d'encre et comprend 0,15 % à 3 % en poids d'un silane comme activateur d'adhésion, 70 % à 97 % en poids d'eau déminéralisée et 0 % à 19,4 % en poids d'alcool éthylique.

3. Procédé d'application d'une composition d'encre organique polymérisable aux ultraviolets sur un substrat comprenant :
a) la préparation d'une composition d'encre organique polymérisable aux rayonnements ultraviolets en mélangeant 80 à 95 % en poids d'une encre à base d'époxypolyuréthane et 0,5 % à 8 % en poids d'un mélange de cires polyéthyléniques et de cires polytétrafluoroéthyléniques en agitant fortement le mélange;
b) l'addition de 1 à 7 % en poids d'un agent résistant à l'eau constitué de polyamide de bas poids moléculaire et de poids moléculaire intermédiaire juste avant l'application de la composition d'encre préparée car cette composition, une fois préparée, dure moins de 8 heures ;
c) l'addition de 0,15 % à 3 % en poids d'un silane comme activateur d'adhésion ;
d) l'application de la composition d'encre préparée sur le substrat de verre par sérigraphie, tampographie ou analogue ;
e) la polymérisation de la composition d'encre en exposant la surface revêtue à un rayonnement ultraviolet ;
f) le chauffage du substrat en le faisant passer au travers d'un dispositif de chauffage pour augmenter la température du substrat entre 100° C et 160° C ; et
g) l'application d'un agent lubrifiant comprenant un produit à base d'acide oléique sous forme de gaz ou de vapeur et/ou la projection d'une émulsion aqueuse d'un dérivé de polyéthylène éthoxylé sur la partie du substrat de verre comprenant la composition d'encre.

4. Procédé selon la revendication 3, dans lequel la composition d'apprêt d'activateur d'adhésion est préparée séparément en ajoutant 70 % à 97 % en poids d'eau déminéralisée et 0 % à 19,4 % en poids d'alcool éthylique et 0,15 % à 3 % en poids d'un silane sous agitation et est appliquée comme une couche mince sur le substrat de verre avant l'application de la composition d'encre organique polymérisable aux ultraviolets et est séchée sur le substrat de verre.
